# EUROPÄISCHE PATENTSCHRIFT

(11) **EP 3 057 765 B1**
(45) Veröffentlichungstag und Bekanntmachung des Hinweises auf die Patenterteilung: **01.12.2021**
(21) Anmeldenummer: 14820728.5
(22) Anmeldetag: 15.10.2014
(51) Int. Cl.: B29C 48/88, B29C 48/08, B29C 48/92

(54) **BLASFOLIENANLAGE ZUM BETREIBEN EINER BLASFOLIENANLAGE**
BLOWN FILM LINE FOR OPERATING A BLOWN FILM LINE
INSTALLATION DE PRODUCTION DE FEUILLES SOUFFLÉES PERMETTANT DE FAIRE FONCTIONNER UNE INSTALLATION DE PRODUCTION DE FEUILLES SOUFFLÉES

(30) Priorität: 15.10.2013 DE 102013017072
(43) Veröffentlichungstag der Anmeldung: 24.08.2016
(73) Patentinhaber: Reifenhäuser GmbH & Co. KG Maschinenfabrik, 53844 Troisdorf (DE)
(72) Erfinder: SCHUMACHER, Holger, 53757 Sankt Augustin (DE)
(74) Vertreter: Schieber, Christian
(86) Internationale Anmeldenummer: PCT/DE2014/000521
(87) Internationale Veröffentlichungsnummer: WO 2015/055169

(56) Entgegenhaltungen:
- EP-A1- 0 553 367
- EP-A2- 1 800 832
- WO-A1-2006/032937
- DE-U1- 8 902 689
- JP-U- S54 163 174
- US-A- 3 891 374
- US-A- 4 479 766
- US-A- 5 576 029
- None

## Beschreibung

Die Erfindung betrifft eine Blasfolienanlage.

Blasfolienanlagen sind umfangreich im Stand der Technik bekannt. Sie werden dazu eingesetzt, aus einem aufgeschmolzenen thermoplastischen Kunststoff großformatige Folien in Form von Schläuchen herzustellen.

Ein oder mehrere Extruder schmelzen Ausgangsmaterial in Form von thermoplastischem Kunststoff auf und homogenisieren dieses. Die resultierende plastifizierte Schmelze steht unter Druck und wird über Kanäle in einen Blaskopf eingeführt. Dort werden ein- oder mehrschichtige Folien, austretend aus einer Ringdüse, aus dem Blaskopf erzeugt. Aus der Ringdüse steigt somit ein noch schmelzeförmiger Folienschlauch auf. Im Inneren des Folienschlauchs befindet sich ein Überdruck. Dieser veranlasst den Folienschlauch dazu, sich wegen des noch schmelzeförmigen Zustandes in Extrusionsrichtung, in der Praxis meist nach oben, radial aufzuweiten, bis die Festigkeit des Folienschlauches so stark ist, dass der Folienschlauch unter dem Innendruck nicht weiter eine Aufweitung erfährt. In der Praxis wird dort von der "Frostlinie" gesprochen. Gleichzeitig zieht ein Abzugswalzenpaar den Folienschlauch in Extrusionsrichtung längs und bewirkt dadurch zusätzlich zur Querverstreckung durch das Aufblasen eine Längsverstreckung.

In den meisten Anwendungsfällen ist es von Vorteil, die Frostlinie so niedrig wie möglich einzuspielen, also so nah am Austritt der Schmelze aus der Ringdüse wie möglich. In der Praxis werden deshalb sowohl im Inneren als auch außerhalb des Folienschlauchs Kühlmittel eingesetzt: Im Inneren befindet sich dazu gegebenenfalls ein sogenannter "Innenkühlkörper". Außen befinden sich meist "Luftkühlringe" oder jedenfalls ein Luftkühlring.

Die DE 1 211 379 stellt eine Anlage vor, bei welcher ein Schlauch aus einer Ringschlitzdüse hergestellt wird. Der Schlauch wird durch Zufuhr von Blasluft aufgeweitet, wobei die Blasluft in den Schlauch zwischen der Düse und einem durch Wasser gekühlten Kühlkörper eingeführt wird. Die Blasluft zur Aufweitung der Blasfolie wird durch einen doppelwandigen, mit Wasser durchflossenen Kühlkörper gekühlt. Diese gekühlte Luft kann der Blasfolie Wärme entziehen.

Die DE 26 08 311 A1 zeigt eine Anlage, bei welcher die Folie an ihrer Innenseite durch einen mit Wasser gekühlten Kühlkörper und an der Außenseite durch direkte Berührung mit Wasser gekühlt wird.

Die DE 39 03 174 A1 zeigt eine Blasfolienanlage, bei welcher zur Innenkühlung des Folienschlauchs ein Kühlzylinder vorgesehen ist, welcher an vier diskreten Positionen - über die Höhe des Zylinders verteilt - Kühlluftnuten um den Umfang des Zylinders herum aufweist.

Die DE 29 24 897 A1 zeigt einen zylindrischen Stabilisator für Harzblasen, welcher den Folienschlauch zwar von innen beheizt, aber im Durchmesser aufweitet. Im Gegenzug ist außen um den Folienschlauch herum ein Luftkühlungsring vorgesehen. Der innere Stabilisator weist eingravierte oder eingeschnittene Muster insbesondere in Form von Rillen auf.

Die EP 1 800 832 A2 zeigt einen Innenkühlkörper für eine Blasfolienanlage. Der Innenkühlkörper weist an seiner Mantelfläche Strömungskanäle auf, deren Verlauf sich zumindest über einen Teil einer Längserstreckung des Innenkühlkörpers erstreckt. Durch diese makroskopisch strukturierte Oberfläche entstehen Luftwirbel am Innenkühlkörper, welche für eine gepolsterte Führung des aufsteigenden Blasfolienschlauches sorgen.

Blasfolienanlagen werden häufig mit Kühlringen oder sogar mit Doppelkühlringen ausgestattet, um den Durchsatz dieser Anlagen zu erhöhen. Zwischen dem ersten und dem zweiten Kühlring wird die Schmelze bereits bis zu einem bestimmten Verhältnis ausgezogen. Dies führt dazu, dass die Schmelze am oberen Kühlring durch die geringe Dicke leichter gekühlt werden kann. Ohne weiteres können auch mehr als zwei Kühlringe zum Einsatz kommen.

Die DE 32 41 192 C2 beschreibt eine Blasfolienanlage mit einem ersten Kühlring, welcher stromabwärts direkt nach einer Düse angeordnet ist, einem zweiten Kühlring, welcher kurz vor der Kalibrierung angeordnet ist und einer optional dazwischen angeordneten Irisblende, welche ein Flattern des Folienschlauchs verhindern soll.

Die US 5 576 029 A1 offenbart eine interne Kühlluftzufuhranordnung für eine Blasfolienanlage mit einem unteren ringförmigen Element, das auf einer ringförmigen Düse montiert werden kann, um sich innerhalb einer extrudierten röhrenförmigen Kunststofffolie zu befinden, wenn die Folie die Düse verlässt. Ein Zwischenringelement ist über dem unteren Ringelement positionierbar, wobei sich ein Luftentfernungskamin nach oben erstreckt, wobei das Zwischenringelement eine erste Kammer mit dem unteren Ringelement bildet und eine ringförmige Unterkante aufweist, die von einer ringförmigen Oberkante des unteren ringförmigen Elements beabstandet ist und mit dieser zusammenarbeitet, um einen ersten Kühlluftauslass aus der ersten Kammer zu bilden. Das Zwischenringelement hat einen Übertragungskanal zum Übertragen von Kühlluft von der ersten Kammer in das Innere des Zwischenringelements. Ein erstes oberes Ringelement ist über dem Zwischenringelement positionierbar, wobei sich der Luftentfernungskamin nach oben erstreckt, wobei das obere Ringelement eine zweite Kammer mit dem Zwischenringelement bildet und eine ringförmige Unterkante aufweist, die von einem oberen Ring entfernt ist und mit diesem zusammenarbeite, um einen zweiten Kühlluftauslass aus der zweiten Kammer zu bilden.

Die WO 2006 / 032 937 A1 offenbart eine Blasfolienanlage mit einer internen und / oder externen mehrstufigen Kühlvorrichtung, die koaxial zu einer Ziehöffnung einer Extruderdüse angeordnet ist und mehrstufige tangentiale Auslässe für das Kühlmittel aufweist, um einen instabilen Abschnitt des expandierten Folienschlauchs durch spiralförmige Kühlmittelströme zu stabilisieren. Die interne Vorrichtung umfasst Kühleinheiten, die in axialem Abstand voneinander angeordnet sind und den Folienabschnitt durch einen Spalt umgeben. Jede Kühleinheit ist mit einer Kühlmittelzufuhr verbunden, um das Kühlmittel mit selektiv einstellbarer Temperatur zuzuführen. Die externe Kühlvorrichtung umfasst mindestens zwei Kühleinheiten, die in axialem Abstand voneinander angeordnet sind und den Folienabschnitt durch einen Spalt umgeben. Jede Kühleinheit ist mit tangentialen Einlässen versehen und mit einer Kühlmittelzufuhr verbunden, um das Kühlmittel mit selektiv und individuell einstellbarer Temperatur und / oder Volumen und / oder Druck zuzuführen.

Die EP 0 553 367 A1 offenbart eine Blasfolienanlage. Um bei einem extrudierten Folienschlauch aus HDPE, der mit langem Hals gefertigt wird, die Dicken- und Festigkeitswerte zu vergleichmäßigen ist zusätzlich zum die Ringdüse des Blaskopfes umgebenden Außenblasring ein Luftdüsenkranz in Höhe des Endes des langen Halses vorgesehen. Der Luftdurchsatz durch die Düsen des Luftdüsenkranzes wird in Abhängigkeit einer sich drehenden Foliendickenmeßvorrichtung gesteuert, die oberhalb der Aufweitung des Folienschlauchs angeordnet ist. Die Kühlleistung des Außenblasrings ist bevorzugt zwanzigmal größer als diejenige des Luftdüsenkranzes. Zur Stabilisierung der Folienblase ist in Höhe des Endes des langen Halses ein Innendorn vorgesehen.

Die DE 8 902 689 U1 beschreibt eine Vorrichtung zur Herstellung einer Schlauchfolie aus Kunststoff mit einer Ringspaltdüse für den vertikal aufwärts austretenden Schlauch, einem koaxial zu und in Abzugsrichtung hinter der Ringspaltdüse angeordneten Innenstabilisator und einem innerhalb der Ringspaltdüse mündenden Innenluftzufuhrkanal, wobei der Innenstabilisator auf einem von der Ebene der Ringspaltdüse aus in Abzugsrichtung ragenden Tragrohr angeordnet und eine im Wesentlichen durchgehende Außenfläche aufweist und wobei der Innenstabilisator, vorzugsweise, als sich in Abzugsrichtung aufweitender schlanker Konus ausgebildet ist und ist dadurch gekennzeichnet, dass das Tragrohr gleichzeitig als Innenluftabführkanal ausgeführt ist und dass der Innenstabilisator, insbesondere im Inneren, sich von der der Ringspaltdüse zugewandten Seite zu der von der Ringspaltdüse abgewandten Seite erstreckende Luftbypasskanäle aufweist.

Die JP S54 163 174 U offenbart eine Vorrichtung zum schnellen Kühlen einer Folie durch ständiges Ersetzen von Luft in einer schlauchförmigen Kunststofffolie, die aus einer Düse einer Aufblasdüse extrudiert wird, um eine Hochgeschwindigkeitsformung der Folie zu fördern. Die Kühlluft wird über einen ringförmigen Luftzufuhrkanal, der durch einen unteren Führungsring, der sich am Umfangsrand der Öffnung befindet, und einen oberen Führungsring, der unmittelbar über dem unteren Führungsring in einem vorbestimmten Abstand vorgesehen ist, zur Blasenoberfläche geleitet, wobei ein Innenkühlkörper eine funktional modifizierte Oberfläche aufweist. Die US 4 479 766 A1 offenbart eine Vorrichtung zur Herstellung eines Kunststofffilms durch Extrusion eines Rohrs mit einem ersten Luftring, der am Düsenausgang angeordnet ist und einen ringförmigen Kühlluftstrom an die Oberfläche des austretenden Rohrs abgibt, das sich beim Entweichen in einer stabilen Expansionsphase befindet. Vorzugsweise ist der Strom axial vom Rohrweg gerichtet. Die Vorrichtung umfasst die Kombination eines Kalibrierkäfigs und eines zweiten Luftrings, der für eine Längsbewegung entlang des Rohrs montiert ist. Das Rohr wird mit den Luftringen dicht beieinander hergestellt und sie werden so schnell wie möglich so weit wie möglich auseinander bewegt. Der zweite Luftring befindet sich direkt unterhalb der Stelle, an der sich das Rohr auszudehnen beginnt, und liefert einen ringförmigen Luftstrom, vorzugsweise auf bekannte Weise vom Rohr weg, um ein Vakuum zu bilden, das das Rohr stabilisiert. Ein zusätzlicher mechanischer oder Luftrohrstabilisator kann am Einlass des zweiten Luftrings vorgesehen sein, der aus einem Ring von Rollen aus Material mit niedrigem Reibungskoeffizienten besteht.

Weitere Blasfolienanlagen und Kühlringe sind bekannt aus der DE 44 05 463 A1, der DE 34 36 881 A1, der US 4,601,649 B, der US 3,555,604 B, der US 4,606,879 B, der US 6,273,699 B, der US 5,126,096 B, der US 4,842,803 B, der US 5,576,029 B, dem Vortrag "IKV-Fachtagung Folienextrusion - Rohstoffe, Verarbeitung, Anwendungen; Steigerung des Durchsatzes durch innovative Ansätze zur Schlauchkühlung bei der Blasfolienextrusion" vom 22./23. September 2008 aus Aachen, referiert von Dr. Christoph Lettowsky, damals Kiefel Extrusion GmbH, Worms, sowie aus dem Artikel "Wasser mit Luft kombiniert" des Dr. Christoph Lettowsky, veröffentlicht im Carel Hanser Verlag, München, in der Zeitschrift "Kunststoffe 11/2008", sowie aus der DE 1 504 648, der US 3,650,644, der AT 315 472, der DE 26 39 551 A1 und der DE 38 15 415 A1.

Der vorliegenden Erfindung liegt die Aufgabe zugrunde, den Durchsatz bei einer dennoch sicheren Produktion weiter zu erhöhen.

Diese Aufgabe löst eine Blasfolienanlage mit einem Innenkühlkörper mit einer Luftaustrittsstrecke, wobei der Innenkühlkörper zumindest über einen überwiegenden Teil der Luftaustrittsstrecke sich monoton oder streng monoton aufweitend ausgebildet ist und wobei ein höhenverstellbarer Kühlring zum Kühlen eines im Betrieb der Blasfolienanlage laufenden Blasfolienschlauchs von außen vorgesehen ist, wobei .ein Controller vorgesehen ist., der in Wirkverbindung zu einem Höhenverstellmittel des Kühlrings steht, wobei der Controller dazu eingerichtet ist, den Kühlring während eines Anfahren der Blasfolienanlage unterhalb der oberen Hälfte der Luftaustrittsstrecke zu positionieren und zur steady-state-Produktion in diesen Bereich zu verfahren, wobei die Blasfolienanlage mittels des Controllers im Betrieb ein Verfahren durchführt. wobei zum Anfahren der Blasfolienanlage der Kühlring weiter unten positioniert wird als in der oberen Hälfte der Luftaustrittsstrecke, und dann zum Erreichen der steady-state-Produktion der Kühlring nach oben verfahren wird, wobei die Blasfolienanlage dazu eingerichtet ist, den Kühlring während der steady-state-Produktion in der oberen Hälfte der Luftaustrittsstrecke zu positionieren, besonders bevorzugt im oberen Drittel.

Begrifflich sei hierzu Folgendes erläutert:

Im Rahmen der vorliegenden Patentanmeldung seien unbestimmte Artikel und Zahlenangaben wie "ein ... ", "zwei..." usw. regelmäßig als mindestens-Angaben zu verstehen, also als "mindestens ein ...", "mindestens zwei ..." usw., außer wenn sich aus dem jeweiligen Kontext ergibt, dass etwa dort nur "genau ein ...", "genau zwei..." usw. gemeint sein sollen.

Der Wortlaut der hier vorliegenden Patentanmeldung ist so gewählt, dass er eine Blasfolienanlage beschreibt, die den Folienschlauch von unten nach oben steigen lässt, also gegen die Schwerkraft aus der Ringdüse ausbläst und nach oben abzieht. Es sei aber ausdrücklich betont, dass die Erfindung ebenso auf eine mit der Schwerkraft nach unten blasende Anlage anwendbar ist. Alle hier vorliegenden Formulierungen sind dann analog anzupassen, also in den meisten Fällen einfach umzudrehen.

Der "Innenkühlkörper" ist ein innerhalb der designierten Begrenzung durch den Folienschlauch vorgesehener Körper, welcher an Luftantriebsmittel angeschlossen ist, vor allem an eine Pumpe, so dass die Luft über eine "Luftaustrittsstrecke" mit Druck aus dem Innenkühlkörper hinausgeblasen werden kann und dadurch gegen die den Innenkühlkörper im Betrieb der Blasfolienanlage umgebende Blasfolie trifft.

Das Maß der "Luftaustrittsstrecke" sei in einer Projektion des am Innenkühlkörper vorgesehenen geöffneten Bereichs zum Luftaustritt auf die Extrusionsachse gemessen, also auf eine zentrale Achse entlang des sich von der Ringdüse fortbewegenden Folienschlauchs zum Abzug.

Die Luftaustrittsstrecke wird in den meisten Fällen die vollständige Höhe sein, auf welcher am Innenkühlkörper die Luft ausgeblasen wird.

Es sind jedoch konstruktive Ausführungen denkbar, bei welchen zunächst der Innenkühlkörper den ganz überwiegenden Teil der Blasluft ausstößt, worauf sich oberhalb nach einem vertikalen Abstand ein weiterer Luftaustritt befindet, sei es ein in Bezug zur Höhe punktueller Luftaustritt oder sei es ein Luftaustritt mit einer vertikalen Erstreckung. Bei einer solchen Konstellation sei als die "Luftaustrittsstrecke" nur der untere Teil der Luftaustritte verstanden, wenn oberhalb der ersten Luftaustrittsstrecke weniger als 10 % der Luft ausgeblasen wird. In den meisten Fällen wird die Luftaustrittsstrecke maximal ca. 1 m hoch sein, oder auch beispielweise bis zu 2 m hoch.

Eine vereinfachende Konstellation kann dort das obere Ende der Luftaustrittstrecke dort ansetzen, wo sich - beginnend am unteren Ende des Druckluftaustritts - über die aufsteigende Höhe am Innenkühlkörper im mathematischen Sinne integriert 90 % oder 95 % des Druckluftstroms aus dem Innenkühlkörper addiert haben. Bei einem einfachen Innenkühlkörper mit einer einteiligen Luftaustrittsstrecke wird diese Definition zwar im Regelfalls geringfügig von der rein geometrischen Luftaustrittsstrecke um wenige cm abweichen, aber vermutlich gerade bei mehrteiligen Luftaustrittsstrecken oft zu einer sicher anzuwendenden Definition führen.

Ein "sich-Aufweiten" des Innenkühlkörpers bedeutet, dass der zumindest im Wesentlichen in jedem Querschnitt entlang der Extrusionsrichtung - im Normalfall kreisrunde - Innenkühlkörper einen Durchmesser aufweist, wobei sich dieser Durchmesser entlang der Extrusionsrichtung monoton oder streng monoton vergrößert. Der Durchmesser sei die kleinste kreisrunde Umgebende eines jeden Querschnitts, wobei Luftaustrittsschlitze vernachlässigt werden können.

Der "höhenverstellbare" Kühlring muss in Wirkverbindung zu einem Höhenverstellmittel stehen, beispielsweise zu einem herkömmlichen Motor, einem Stepper-Motor, einem Torque-Motor, einem hydraulischen oder einem pneumatischen oder einem anderweitigen Antrieb. Wichtig ist, dass der Antrieb dazu eingerichtet ist, den Kühlring auch während des Betriebs der Blasfolienanlage in seiner Höhe zu verstellen, also in seinem Abstand zur Ringschlitzdüse im Blaskopf. Das Blasen kann nach oben oder nach unten erfolgen.

Beim Anfahren der Produktion an einer Blasfolienanlage liegt noch kein vollständiger Folienschlauch vom Blaskopf zum Abzug vor. Vielmehr wird zunächst der vom Blaskopf kommende Folienschlauch manuell gegriffen und zum Abzug geführt. Wenn der Abzug zu ziehen beginnt, kann sich die Anlage langsam auf einen stetigen Produktionszustand einlaufen, also auf den Zustand der "steady-state-Produktion".

Das "Positionieren" des Kühlrings in der oberen Hälfte der Luftaustrittsstrecke soll bedeuten, dass entweder die Luftaustrittsschlitze oder Luftaustrittslöcher am Kühlring in senkrechter Projektion auf die Extrusionsachse eine entsprechende Höhe über dem Blaskopf in der Luftaustrittsstrecke haben, oder dass die Luftauftrefflinie der vom Kühlring ausgeblasenen Luft auf den Folienschlauch eine entsprechende Höhe aufweist, oder bevorzugt beides.

Versuche des Erfinders an einem Prototypen haben gezeigt, dass mit der vorliegenden Erfindung eine erhebliche Durchsatzsteigerung selbst gegenüber bisher schon durchsatzstarken Anlagen erreicht werden kann, ohne dabei die Qualität der Produktion aus dem Auge zu verlieren.

Der Innenkühlkörper kann bevorzugt eine strukturierte Oberfläche aufweisen. Hinsichtlich der verschiedenen Möglichkeiten einer strukturierten Oberfläche sei auf den Offenbarungsgehalt der EP 1 800 832 A2 verwiesen, deren gesamter Offenbarungsgehalt im Wege des Verweises hier mit offenbart verstanden sein soll.

Der Innenkühlkörper kann Ringnuten aufweisen, welche als Luftauslässe gestaltet sind. Die Ringnuten selbst können beispielsweise mehrere diskrete Bohrungen haben, durch welche sie mit der Druckluft aus ihrem Inneren heraus gespeist werden.

Alternativ oder kumulativ ist denkbar, dass der Innenkühlkörper ein Lochblech an seiner Oberfläche aufweist. Ein solches Lochblech kann aufgrund der Vielzahl an runden, quadratischen, rechteckigen oder sonstwie gestalteten Luftauslässen ebenfalls zum Ausblasen von Kühlluft zum Folienschlauch eingesetzt werden.

Es wird vorgeschlagen, dass der Innenkühlkörper eine funktional modifizierte Oberfläche aufweist.

Die Oberfläche des Innenkühlkörpers wird im Regelfall aus Metall sein. Eine funktionale Oberflächenmodifikation kann beispielsweise eine Beschichtung sein.

Denkbar sind beispielsweise Modifikationen zum Reduzieren von Paraffinniederschlag oder zum Herabsetzen der Oberflächenrauigkeit oder zum Beeinflussen der Wärmeleitfähigkeit.

Es scheint vorteilhaft, wenn das Höhenverstellmittel für den Kühlring mit einem manuellen Schalter wirkverbunden ist, wobei der Schalter eine Hochfahrstellung, eine Herunterfahrstellung und eine Haltstellung aufweist. So kann der Kühlring manuell leicht in der Höhe verfahren werden.

Wenn das Höhenverstellmittel mit einem manuellen Schalter wirkverbunden ist, wobei der Schalter eine Hochfahrfederposition und eine Herunterfahrfederposition aufweist, dann kann der Bediener den Schalter wie einen Taster bedienen. Entweder hält der Bediener den Schalter so lang gegen die Federkraft zum Hoch- oder Herunterfahren in Position, und der Kühlring hält an, sobald der Bediener den Schalter loslässt, sodass dieser von der Federkraft zurückgestellt wird; oder der Bediener geht mit dem Schalter kurz gegen die Federspannung gegen eine der beiden gefederten Endpositionen, kann anschließend den Schalter zurückfedern lassen, und der Kühlring fährt automatisch in eine obere bzw. eine untere Endposition.

Wenn das Höhenverstellmittel mit einem Controller wirkverbunden ist und der Controller mit einer Rezeptdatenbank datenverbunden ist, wobei der Controller dazu eingerichtet ist, aus der Rezeptdatenbank Daten zu einer Höhensollposition des Kühlrings auszulesen, vor allem zu genau zwei Höhensollpositionen, und das Höhenverstellmittel dementsprechend anzusteuern oder anzuregeln, dann kann das Verfahren des Kühlrings automatisch erfolgen. Die Automatik kann sich auf die zeitlichen oder örtlichen Details des Verfahrens erstrecken, bevorzugt auf beides.

Es wurde bereits erwähnt, dass bevorzugt ein Controller vorgesehen ist, der in Wirkverbindung zu einem Höhenverstellmittel des Kühlrings steht.

Der Controller kann dazu eingerichtet sein, den Kühlring während der steady-state-Produktion ortsfest zu halten, oder er kann dazu eingerichtet sein, den Kühlring während der steady-state-Produktion infolge laufender Messwerte in Bewegung zu halten, wobei bei letzterer Variante eine Regelung erreicht ist, so dass der Controller ebenfalls in Datenübertragungsverbindung mit einem Messmittel sein soll, beispielsweise mit einem Messmittel für die Dicke der Folie am Folienschlauch.

Der Controller ist dazu eingerichtet, den Kühlring während eines Anfahrens der Blasfolienanlage unterhalb der oberen Hälfte der Luftaustrittsstrecke zu positionieren, und zur steady-state-Produktion den Luftkühlring dann in den oberen Bereich zu verfahren und dort während

der steady-state-Produktion zumindest über den weit überwiegenden Teil der Zeit, bevorzugt über zumindest 90% der Zeit, zu halten.

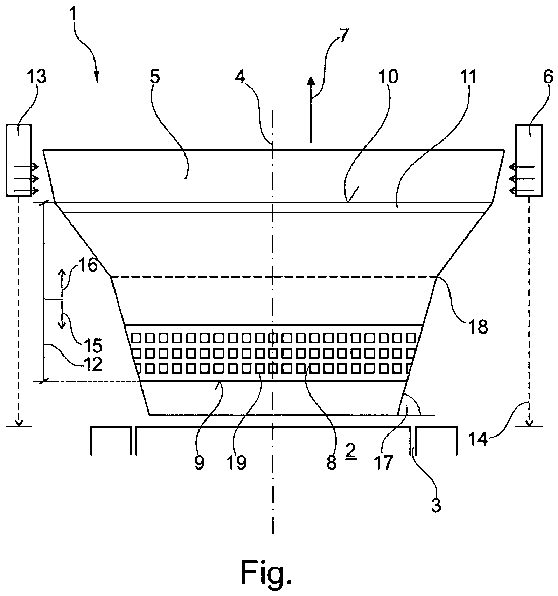

Die Erfindung wird nachstehend anhand eines Ausführungsbeispiels unter Bezugnahme auf die Zeichnung näher erläutert. Dort zeigt
- die einzige Figur: stark schematisch in einem Längsschnitt den oberen Rand eines Blaskopfes mit einer Ringdüse, den unteren Teil eines Innen-kühlkörpers sowie einen höhenverstellbaren Kühlring, jeweils an einer Blasfolienanlage.

Die Blasfolienanlage 1 in der Figur (nur teilweise dargestellt) besteht hinsichtlich des Ausblasens der Kunststoffschmelze im Wesentlichen aus dem Blaskopf 2 mit einer Ringschlitzdüse 3, welche um eine Extrusionsachse 4 rotationssymmetrisch aufgebaut ist, ebenso wie ein darüber liegender Innenkühlkörper 5 und ein Kühlring 6. Im Betrieb der Blasfolienanlage 1 wird eine Kunststoffschmelze durch die Ringschlitzdüse 3 in einer Extrusionsrichtung 7, also vertikal nach oben, ausgeblasen. In ihrem Durchmesser senkrecht zur Extrusionsachse 4 weitet sich die Blasfolie dann entlang der Extrusionsrichtung 7 um den Innenkühlkörper 5 herum auf, bevorzugt ohne diesen zu berühren.

Entlang der Höhe des Innenkühlkörpers 5 sind Luftaustrittsbereiche angeordnet, beispielsweise Luftaustrittsnuten oder mit Druckluft hinterströmte Lochbleche 8 (exemplarisch dargestellt).

Von einer untersten Höhe 9, auf welcher aus dem Innenkühlkörper 5 Kühlluft ausgeblasen wird, bis zu einer höchsten Höhe 10, hier beispielsweise durch eine Luftaustrittsnut 11 dargestellt, befindet sich eine Luftaustrittsstrecke 12 parallel zur Extrusionsachse 4.

Der Kühlring 6 hat Luftaustrittsdüsen 13 (exemplarisch beziffert). Der Kühlring 6 ist außerdem entlang einer Verfahrstrecke 14 höhenverstellbar entlang des Innenkühlkörpers 5 gelagert. Ein Höhenverstellmittel (nicht dargestellt) ist mit einem Controller (nicht dargestellt) wirkverbunden, so dass der Controller den Kühlring 6, genauer seinen auf die Extrusionsachse 4 projizierten Bereich an Luftaustrittsdüsen 13, innerhalb bestimmter Maximalgrenzen verfahren kann.

Die bevorzugte Ausfuhrungsform der Erfindung sieht vor, dass die Luftaustrittsdüsen 13 des Kühlrings 6 oder im Falle mehrerer Kühlringe zumindest eines Kühlrings, bevorzugt aber aller Kühlringe, bevorzugt während des Anfahrens der Anlage in einen unteren Bereich 15 der Luftaustrittsstrecke 12 positioniert werden, in jedem Falle aber während der steady-state-Produktion in einem oberen Bereich 16.

Der Innenkühlkörper 5 kann, wie im hier dargestellten Beispiel gezeigt, über verschiedene Neigungswinkel 17 seines Mantels verfügen, hier beispielsweise zunächst über einen streng monoton aufweitenden Neigungswinkel 17, dann über einen Knick 18, dann wieder über einen stärker streng monoton im Durchmesser ansteigenden Bereich und schließlich über einen langsamer streng monoton im Durchmesser ansteigenden Bereich. Prototypenversuche des Erfinders haben ergeben, dass sich der Durchmesser des Innenkühlkörpers 5 streng monoton oder zumindest monoton aufweiten sollte, wobei bevorzugt zumindest ein Bereich mit streng monotoner Aufweitung vorhanden ist, also ein nichtzylindrischer Bereich mit einem Neigungswinkel 17 des Mantels ≠ 90°, wobei sich der Winkel auch sprunghaft oder stetig über die Höhe ändern kann. Von den Luftaustritten gebildete etwaige kleine Rücksprünge in der Oberfläche des Innenkühlkörpers 5, wie beispielsweise durch jede Ausnehmung 19 am Lochblech 8 hervorgerufen, sei hierbei nicht geachtet. Vielmehr sei die eigentliche Oberflächenkontur betrachtet.

Wenn sich der Durchmesser entlang der Extrusionsrichtung streng monoton aufweitet, dann steht der Blasfolienschlauch aufgrund der ebenfalls streng monotonen Aufweitung über die gesamte Strecke unter Zugspannung, was einen Faltenwurf verhindern kann.

Es versteht sich, dass die Figur nur ein Ausführungsbeispiel von vielen darstellt. Die gezeigte Ausführungsform ist deshalb nicht als der äußere Umfang des beanspruchten Schutzes zu verstehen.

### Bezugszeichen

- 1: Blasfolienanlage
- 2: Blaskopf
- 3: Ringschlitzdüse
- 4: Extrusionsachse
- 5: Innenkühlkörper
- 6: Kühlring
- 7: Extrusionsrichtung
- 8: Lochblech
- 9: unterste Höhe
- 10: höchste Höhe
- 11: Luftaustrittsnut
- 12: Luftaustrittsstrecke
- 13: Luftaustrittsdüse
- 14: Verfahrstrecke
- 15: unterer Bereich
- 16: oberer Bereich
- 17: Neigungswinkel
- 18: Knick
- 19: Ausnehmung

## Patentansprüche

1. Blasfolienanlage
mit einem Innenkühlkörper mit einer Luftaustrittsstrecke,
wobei der Innenkühlkörper zumindest über einen überwiegenden Teil der Luftaustrittsstrecke sich monoton oder streng monoton aufweitend ausgebildet ist, und wobei ein höhenverstellbarer Kühlring zum Kühlen eines im Betrieb der Blasfolienanlage laufenden Blasfolienschlauchs von außen vorgesehen ist,
wobei ein Controller vorgesehen ist, der in Wirkverbindung zu einem Höhenverstellmittel des Kühlrings steht, wobei der Controller dazu eingerichtet ist, den Kühlring während eines Anfahrens der Blasfolienanlage
unterhalb der oberen Hälfte der Luftaustrittsstrecke zu positionieren und zur steady-state-Produktion in diesen Bereich zu verfahren
wobei die Blasfolienanlage mittels des Controllers im Betrieb ein Verfahren durchführt, wobei zum Anfahren der Blasfolienanlage der Kühlring weiter unten positioniert wird als
in der oberen Hälfte der Luftaustrittsstrecke,
und dann zum Erreichen der steady-state-Produktion der Kühlring nach oben verfahren wird,
wobei die Blasfolienanlage dazu eingerichtet ist, den Kühlring während der steady-state-Produktion in der oberen Hälfte der Luftaustrittsstrecke zu positionieren, besonders bevorzugt im oberen Drittel.

2. Blasfolienanlage nach Anspruch 1, ***dadurch gekennzeichnet, dass*** sie den Blasfolienschlauch nach oben aufsteigen zu lassen und abzuziehen eingerichtet ist.

3. Blasfolienanlage nach einem der vorstehenden Ansprüche, ***dadurch gekennzeichnet, dass*** der Innenkühlkörper eine strukturierte Oberfläche aufweist.

4. Blasfolienanlage nach einem der vorstehenden Ansprüche, ***dadurch gekennzeichnet, dass*** der Innenkühlkörper Ringnuten aufweist, welche als Luftauslässe gestaltet sind.

5. Blasfolienanlage nach einem der vorstehenden Ansprüche, ***dadurch gekennzeichnet, dass*** der Innenkühlkörper ein Lochblech an seiner Oberfläche aufweist.

6. Blasfolienanlage nach einem der vorstehenden Ansprüche, ***dadurch gekennzeichnet, dass*** der Innenkühlkörper eine funktional modifizierte Oberfläche aufweist.

7. Blasfolienanlage nach Anspruch 6, ***dadurch gekennzeichnet, dass*** der Innenkühlkörper eine Beschichtung aufweist.

8. Blasfolienanlage nach einem der vorstehenden Ansprüche, ***dadurch gekennzeichnet, dass*** ein Höhenverstellmittel für den Kühlring vorgesehen ist, welches einen Antrieb aufweist.

9. Blasfolienanlage nach Anspruch 8, ***dadurch gekennzeichnet, dass*** das Höhenverstellmittel mit einem manuellen Schalter wirkverbunden ist, wobei der Schalter eine Hochfahrstellung, eine Herunterfahrstellung und eine Haltstellung aufweist.

10. Blasfolienanlage nach Anspruch 8, ***dadurch gekennzeichnet, dass*** das Höhenverstellmittel mit einem manuellen Schalter wirkverbunden ist, wobei der Schalter eine Hochfahrfederposition und eine Herunterfahrfederposition aufweist.

11. Blasfolienanlage nach einem der Ansprüche 8 bis 10, ***dadurch gekennzeichnet, dass*** das Höhenverstellmittel mit einem Controller wirkverbunden ist und der Controller mit einer Rezeptdatenbank datenverbunden ist, wobei der Controller dazu eingerichtet ist, aus der Rezeptdatenbank Daten zu einer Höhensollposition des Kühlrings auszulesen, vor allem zu genau zwei Höhensollpositionen, und das Höhenverstellmittel dementsprechend anzusteuern oder anzuregeln.

12. Blasfolienanlage nach einem der vorstehenden Ansprüche, ***dadurch gekennzeichnet, dass*** ein Controller vorgesehen ist, der in Wirkverbindung zu einem Höhenverstellmittel des Kühlrings steht, wobei der Controller den Kühlring während der steady-state-Produktion ortsfest hält.

13. Blasfolienanlage nach einem der Ansprüche 1 bis 11, ***dadurch gekennzeichnet, dass*** ein Controller vorgesehen ist, der in Wirkverbindung zu einem Höhenverstellmittel des Kühlrings steht, wobei der Controller den Kühlring während der steady-state-Produktion infolge laufender Messwerte in Bewegung hält.

## Claims

1. Blown film line
having an interior cooling body with an air exit path, the interior cooling body being formed monotonous or strictly monotonously expanding at least over a major part of the air exit path,
and wherein a height-adjustable cooling ring is provided for cooling a moving blown film tubing during operation of the blown film line from the outside,
a controller being provided which is operatively connected to a height adjustment means of the cooling ring, the controller being adapted to position the cooling ring, during start-up of the blown film line,
below the upper half of the air exit path and to move it into this area for steady-state production,
the blown film line performing a method during operation by means of the controller, the cooling ring being positioned for start-up of the blown film line further down than in the upper half of the air exit path and then being moved upwards for reaching steady-state production,
the blown film line being adapted to position the cooling ring during steady-state production in the upper half of the air exit path, particularly preferably in the upper third.

2. Blown film line according to Claim 1, ***characterized by*** being adapted to make the blown film tubing rise upwards and draw it off.

3. Blown film line according to one of the above Claims, ***characterized in that*** the interior cooling body has a structured surface.

4. Blown film line according to one of the above Claims, ***characterized in that*** the interior cooling body has annular grooves embodied as air exits.

5. Blown film line according to one of the above Claims, ***characterized in that*** the interior cooling body has a perforated plate at its surface.

6. Blown film line according to one of the above Claims, ***characterized in that*** the interior cooling body has a functionally modified surface.

7. Blown film line according to Claim 6, **characterized *in that*** the interior cooling body has a coating.

8. Blown film line according to one of the above Claims, ***characterized in that*** a height adjustment means for the cooling ring is provided which includes a drive.

9. Blown film line according to Claim 8, **characterized *in that*** the height adjustment means is operatively connected to a manual switch, the switch having a lifting position, a lowering position and a retention position.

10. Blown film line according to Claim 8, **characterized *in that*** the height adjustment means is operatively connected to a manual switch, the switch having a lifting spring position and a lowering spring position.

11. Blown film line according to one of Claims 8 through 10, ***characterized in that*** the height adjustment means is operatively connected to a controller and the controller is data-connected to a formula database, the controller being adapted to read from the formula database data relating to a desired position in height of the cooling ring, especially relating to exactly two positions in height, and to control the height adjustment means accordingly with open-loop or closed-loop control.

12. Blown film line according to one of the above Claims, ***characterized in that*** a controller is provided which is operatively connected to a height adjustment means of the cooling ring, the controller keeping the cooling ring stationary during steady-state production.

13. Blown film line according to one of Claims 1 through 11, ***characterized in that*** a controller is provided which is operatively connected to a height adjustment means of the cooling ring, the controller keeping the cooling ring moving during steady-state production due to continuous measurement values.

## Revendications

1. Installation de production de feuilles soufflées, dotée d'un corps de refroidissement interne comprenant un trajet de sortie d'air,
sur au moins une majeure partie du trajet de sortie d'air, le corps de refroidissement interne étant conçu en s'évasant de manière monotone ou strictement monotone, et un anneau de refroidissement réglable en hauteur étant prévu pour refroidir par l'extérieur un film tubulaire soufflé se déplaçant en cours de service de l'installation de production de feuilles soufflées,
un contrôleur étant prévu, qui est en connexion active avec un moyen de réglage en hauteur de l'anneau de refroidissement, le contrôleur étant aménagé pour positionner l'anneau de refroidissement pendant un démarrage de l'installation de production de feuilles soufflées
en-dessous de la moitié supérieure du trajet de sortie d'air
et pour le déplacer dans cette zone pour la production stable,
l'installation de production de feuilles soufflées réalisant un procédé au moyen du contrôleur en service pour démarrer l'installation de production de feuilles soufflées, l'anneau de refroidissement étant positionné plus bas que
dans la moitié supérieure du trajet de sortie d'air, et ensuite, pour atteindre la production stable, l'anneau de refroidissement étant déplacé vers le haut,
l'installation de production de feuilles soufflées étant aménagée pour positionner l'anneau de refroidissement pendant la production stable dans la moitié supérieure, de manière particulièrement préférentielle dans le tiers supérieur du trajet de sortie d'air.

2. Installation de production de feuilles soufflées de films selon la revendication 1, **caractérisée en ce qu'**elle est aménagée pour laisser grimper le film tubulaire soufflé vers le haut et pour le retirer.

3. Installation de production de feuilles soufflées de films selon l'une quelconque des revendications précédentes, **caractérisée en ce que** le corps de refroidissement interne comporte une surface structurée.

4. Installation de production de feuilles soufflées de films selon l'une quelconque des revendications précédentes, **caractérisée en ce que** le corps de refroidissement interne comporte des rainures annulaires, lesquelles sont conçues sous la forme de sorties d'air.

5. Installation de production de feuilles soufflées de films selon l'une quelconque des revendications précédentes, **caractérisée en ce que** le corps de refroidissement interne comporte sur sa surface une tôle perforée.

6. Installation de production de feuilles soufflées de films selon l'une quelconque des revendications précédentes, **caractérisée en ce que** le corps de refroidissement interne comporte une surface fonctionnement modifiée.

7. Installation de production de feuilles soufflées de films selon la revendication 6, **caractérisée en ce que** le corps de refroidissement interne comporte un revêtement.

8. Installation de production de feuilles soufflées de films selon l'une quelconque des revendications précédentes, **caractérisée en ce qu'**il est prévu un moyen de réglage en hauteur pour l'anneau de refroidissement, lequel comporte un entraînement.

9. Installation de production de feuilles soufflées de films selon la revendication 8, **caractérisée en ce que** le moyen de réglage en hauteur est en connexion active avec un interrupteur manuel, l'interrupteur comportant une position de montée, une position de descente et une position d'arrêt.

10. Installation de production de feuilles soufflées de films selon la revendication 8, **caractérisée en ce que** le moyen de réglage en hauteur est en connexion active avec un interrupteur manuel, l'interrupteur comportant une position sur ressort de montée et une position sur ressort de descente.

11. Installation de production de feuilles soufflées de films selon l'une quelconque des revendications 8 à 10, **caractérisée en ce que** le moyen de réglage en hauteur est en connexion active avec un contrôleur et **en ce que** le contrôleur est en en réseau de données avec une base de données de recettes, le contrôleur étant aménagé pour lire dans la base de données de recettes des données concernant une position de consigne en hauteur de l'anneau de refroidissement concernant prioritairement précisément deux positions de consigne en hauteur et pour activer et régler en conséquence le moyen de réglage en hauteur.

12. Installation de production de feuilles soufflées de films selon l'une quelconque des revendications précédentes, **caractérisée en ce qu'**il est prévu un contrôleur qui est en connexion active avec un moyen de réglage en hauteur de l'anneau de refroidissement, pendant la production stable, le contrôleur maintenant l'anneau de refroidissement stationnaire.

13. Installation de production de feuilles soufflées de films selon l'une quelconque des revendications 1 à 11, **caractérisée en ce qu'**il est prévu un contrôleur qui est en connexion active avec un moyen de réglage en hauteur de l'anneau de refroidissement, pendant la production stable, le contrôleur maintenant l'anneau de refroidissement en mouvement suite à des valeurs des mesures courantes.
